# EUROPÄISCHE PATENTSCHRIFT

(11) **EP 2 193 733 B1**
(45) Veröffentlichungstag und Bekanntmachung des Hinweises auf die Patenterteilung: **02.05.2012**
(21) Anmeldenummer: 09176840.8
(22) Anmeldetag: 24.11.2009
(51) Int. Cl.: A47J 31/44

(54) **Getränkezubereitungsmaschine sowie Milchbehälter dafür**
Beverage making machine and milk container for same
Machine de préparation de boissons ainsi que récipient de lait correspondant

(30) Priorität: 06.12.2008 DE 202008016202 U
(43) Veröffentlichungstag der Anmeldung: 09.06.2010
(73) Patentinhaber: WIK Far East Ltd., North Point, Hong Kong (CN)
(72) Erfinder: Meuer, Jens Martin, 47269 Duisburg (DE)
(74) Vertreter: Haverkamp, Jens

(56) Entgegenhaltungen:
- EP-A- 0 472 272
- DE-U1- 9 410 129
- DE-U1-202006 014 208
- US-A- 5 836 169

## Beschreibung

Die Erfindung betrifft eine Getränkezubereitungsmaschine, insbesondere Kaffeemaschine, mit einem der Maschine zugeordneten, thermisch isolierten Milchbehälter zur Aufnahme eines Milch enthaltenden Gebindes und mit einer Leitungsdurchbrechung zum Durchführen einer in das Gebinde reichenden Milchentnahmeleitung zur Entnahme von Milch.

Kaffeemaschinen, insbesondere wenn diese als so genannte Vollautomaten ausgeführt sind, verfügen als Getränkezubereitungsmaschinen mitunter über einen Milchbehälter. Ein solcher Milchbehälter, welcher typischerweise ein Zubehörteil für eine solche Kaffeemaschine darstellt, dient zum Bevorraten von Milch, aus dem für die Bereitung von Kaffee-Milch-Mischgetränken, wie beispielsweise Cappuccino oder dergleichen, Milch entnommen wird. Typischerweise handelt es sich bei einem solchen Milchbehälter um einen neben der eigentlichen Kaffeemaschine anzuordnenden Behälter, aus dem eine Milchentnahmeleitung herausgeführt und an eine Saugpumpe der Kaffeemaschine angeschlossen ist. Neben einem Einsatz von Milchbehältern, in die die Milch aus ihrem Gebinde - ihrer Verpackung - eingefüllt wird, sind auch Milchbehälter bekannt geworden, die als Kühlschränke konzipiert sind. Derartige Milchbehälter verfügen über ein thermisch isoliertes Gehäuse sowie eine aktive Kühlung, beispielsweise ausgeführt als Kühlung mittels eines Peltier-Elementes oder im Wege einer ansonsten hinlänglich bekannten Kompressionskühlung. In einem solchen Milchbehälter verbleibt die Milch in ihrem Gebinde. Die Milchentnahmeleitung wird in das Gebinde hinein gelegt und durch eine Leitungsdurchbrechung aus dem Gehäuse herausgeführt. Zum Betrieb eines solchen, als Kühlschrank konzipierten Milchbehälters ist eine elektrische Stromversorgung erforderlich. Vorteilhaft bei einem solchen Milchbehälter ist, dass in diesem ein darin eingestelltes Milchgebinde zum Erreichen der gewünschten Kühltemperatur herabgekühlt werden kann.

In zunehmendem Maße werden Kaffeevollautomaten auch im häuslichen Bereich eingesetzt. Die Anschaffung eines zusätzlichen Milchkühlschrankes wird oftmals als unnötige Anschaffung angesehen, mitunter auch aus Platz- und Stromverbrauchsgründen. Andererseits wird von Verbrauchern jedoch eine Bereitung von Kaffee-Milch-Mischgetränken gewünscht. In einem solchen Fall bedient man sich entweder eines Milchbehälters, in den die Milch eingefüllt wird oder stellt das Milchgebinde neben die Kaffeemaschine. Bei einer solchen Anwendung wird benutzerseitig jedoch öfters die Erfahrung gemacht, dass die neben der Kaffeemaschine positionierte Milch unerkannt sauer geworden ist und dementsprechend das mit dieser bereitete Kaffee-Milch-Mischgetränk nicht dem gewünschten entspricht.

Die Druckschrift US 5,836,169 offenbart einen Kaffeezubereiter mit einer gekühlten Lagereinheit, die in einem gemeinsamen Gehäuse mit einer Kaffeezubereitungseinheit angeordnet ist und einen Lagerraum, ein Elektronikfach und ein Fach für eine Kühleinheit umfasst. Das Fach für die Kühleinheit weist eine zum Lagerraum gerichtete Kühlungsöffnung auf, durch die der Lagerraum mit kühler Luft versorgt wird, und eine zur Rückseite des Kaffeezubereiters gerichtete Öffnung nach außen zur Abgabe der von einer aktiven Kühleinheit nach außen transportierten Wärme an die Umgebungsluft.

Ausgehend von diesem diskutierten Stand der Technik liegt der Erfindung daher die Aufgabe zugrunde, eine Getränkezubereitungsmaschine mit einem Milchbehälter zu konzipieren, mit dem die zu dem vorstehend diskutierten Stand der Technik aufgezeigten Nachteile vermeidbar sind.

Gelöst wird diese Aufgabe erfindungsgemäß durch eine eingangs genannte, gattungsgemäße Getränkezubereitungsmaschine, bei der in einem abgetrennt von einem das Milch enthaltende Gebinde aufnehmenden Kühlraum des Milchbehälters wenigstens ein Fach zur Aufnahme zumindest eines passiven Kühlelements angeordnet ist, in welchem Kühlelementfach ein Kühlelement einsetzbar und herausnehmbar gehalten ist, und der Kühlraum zur Aufnahme des Milch enthaltenden Gebindes dergestalt ausgeführt ist, dass zum Erzielen einer gleichmäßigen Kühlung der in dem Gebinde enthaltenen Milch dieses innerhalb des Kühlraumes mit Abstand zu dem zumindest einen Kühlelementfach und mit Abstand zu zumindest einer den Kühlraum begrenzenden Seitenwände abstellbar ist und dass der Kühlraum zur Aufnahme des Milch enthaltenden Gebindes unterseitig durch einen Boden zum Aufstellen des Gebindes begrenzt ist und dieser Boden eine Stellfläche bildet, die größer ist als die Aufstandsfläche eines darauf abzustellenden Gebindes.

Diese Getränkezubereitungsmaschine verfügt über einen Milchbehälter, der insgesamt isoliert ist und dessen Kühlraum durch Einsatz eines oder mehrerer Kühlelemente passiv gekühlt ist. Zu diesem Zweck ist der Innenraum des Milchbehälters in einen Kühlraum und ein Kühlelementfach unterteilt. Der Kühlraum selbst ist zur Aufnahme eines Milch enthaltenden Gebindes konzipiert, wobei vorgesehen ist, dass das Volumen des Kühlraumes deutlich größer als das Volumen des darin einzusetzenden Milchgebindes ist. Zu diesem Zweck ist der Boden des Kühlraumes größer als die Aufstandsfläche eines darauf abzustellenden Milchgebindes. Dies dient dem Zweck, dass das Milchgebinde sowohl von dem zumindest einem Kühlelement als auch von zumindest einer, vorzugsweise von allen Seitenwänden des Kühlraumes, beabstandet angeordnet werden kann. Die Anordnung des Milch enthaltenden Gebindes bzw. die Konzeption des Kühlraumes, bei der das Milchgebinde mit hinreichendem Abstand von einer oder vorzugsweise mehreren Seitenwänden des Kühlraumes und von dem Kühlelement beabstandet ist, hat zur Folge, dass sich innerhalb des Kühlraums bedingt durch Kälte des in das Kühlfach eingesetzten Kühlelementes, typischerweise ein gefrorener Kühlakku, eine thermische Konvektion einstellt, bei der das Milchgebinde durch die Konvektion luftumströmt wird. Zum Erzielen eines insgesamt umlaufenden Kühlluftstromes um das Milchgebinde herum kann vorgesehen sein, die Stellfläche des Kühlraums mit Aufstellerhöhungen auszustatten, beispielsweise rippenartige oder kegelstumpfartige Erhöhungen, auf denen das Gebinde oberseitig aufsteht. Durch diese Maßnahme sind Wegsamkeiten geschaffen, damit infolge der Kühlkonvektion Luft auch unter dem Milchgebinde durchströmen kann. Die vorbeschriebenen Maßnahmen gewährleisten eine gleichmäßige Kühlung der in dem Gebinde enthaltenen Milch.

Zur Benutzung eines solchen Milchbehälters wird das Milchgebinde - also die Milchpackung - bereits gekühlt in den Kühlraum eingesetzt; in das Kühlelementfach wird ein aus dem Gefrierfach entnommener und somit auf Minustemperaturen gekühlter Kühlakku eingesetzt. Der Milchbehälter ist typischerweise ober- und unterseitig durch einen Deckel verschlossen, damit sich die gewünschte Konvektion innerhalb des Kühlraumes einstellen kann, ohne dass relativ warme Umgebungsluft in den Milchbehälter eindringt. Ein solcher Milchbehälter kann kompakt bauend ausgelegt werden und benötigt insbesondere keine elektrischen Anschlüsse für einen ordnungsgemäßen Betrieb. Maßgeblich ist, dass die darin angeordnete Milch über viele Stunden bestimmungsgemäß gekühlt bleibt, wobei es zum weiteren Aufrechterhalten der gewünschten Kühltemperatur lediglich notwendig ist, ein erstes, in dem Milchbehälter befindliches Kühlelement gegen ein aus dem Gefrierschrank entnommenes auszutauschen. Die Isolierung des Kühlbehälters und die Kühlleistung eines solchen Kühlelements sind so konzipiert, dass eine ordnungsgemäße Kühlung eines in den Kühlraum eingestellten Milchbehälters über sechs bis acht Stunden, oder auch länger, aufrechterhalten bleibt, ohne einen Kühlelementwechsel vornehmen zu müssen. Folglich bleibt die in dem Gebinde enthaltene Milch über den gesamten Zeitraum frisch und genießbar.

Zur kompakten und kostengünstigen Bauweise dieses Milchbehälters trägt die Konzeption und Anordnung des Milchbehälters in dem Kühlraum bei. Durch die Beabstandung des Milchgebindes von den Innenwänden des Kühlraumes zum Gewährleisten des Aufbaus einer Kühlkonvektion ist durch die dazwischen befindliche Luft eine zusätzliche Isolationsschicht bereitgestellt. Folglich kann die dem Gehäuse des Milchbehälters zugeordnete thermische Isolationsschicht, die typischerweise als Schaumschicht ausgebildet ist, entsprechend weniger stark ausgeführt sein. Ausgenutzt wird hierbei, dass die Anzahl der Wärmeübergänge von der gekühlten, in dem Gebinde enthaltenen Milch an die Außenseite des Milchbehälters erhöht ist. Dieses wirkt sich unmittelbar auf eine Reduzierung der Baugröße aus, wobei in diesem Zusammenhang allein aus optischen Gründen eine Baugrößenreduktion um einige Millimeter in der Breite und Tiefe entscheidend sein können.

Das von dem eigentlichen Kühlraum zur Aufnahme des Milchgebindes abgetrennte Kühlelementfach ist in einer solchen Art und Weise von dem Kühlraum abgetrennt, dass sich die vorbeschriebene Kühlkonvektion in den Kühlraum einstellen kann. Dies bedeutet, dass die Abtrennung lediglich dem Zweck dient, das oder die Kühlelemente von dem Milchgebinde zu beabstanden. Eine solche Abtrennung kann daher bereits durch eine an die Milchbehälterinnenseite angeformte und nach innen vorspringende Rippe geringer Höhe ausgebildet werden. Dabei ist vorgesehen, dass die Öffnung zwischen dem Kühlraum und dem Kühlelementfach geringfügig kleiner ist als die diesbezügliche Dimensionierung des in das Kühlfach einzusetzenden Kühlelements. Schließlich dient die Rippe lediglich zum Belassen des Kühlakkus in seinem Kühlfach.

Nachfolgend ist die Erfindung anhand eines Ausführungsbeispiels unter Bezugnahme auf die beigefügten Figuren beschrieben. Es zeigen:
- **Fig. 1**:: eine perspektivische schematisierte Ansicht eines einer Kaffee- maschine zugeordneten Milchbehälters,
- **Fig. 2:**: einen Längsschnitt durch den Milchbehälter der Figur 1,
- **Fig. 3:**: einen horizontalen Querschnitt durch den Milchbehälter der Fi- gur 1,
- **Fig. 4:**: einen Schnitt durch den Milchbehälter entsprechend demjenigen der Figur 3 mit einem anderen, darin eingesetzten Milchgebinde,
- **Fig. 5:**: eine vergrößerte perspektivische Teildarstellung des oberen Ab- schlusses eines weiteren thermisch isolierten Milchbehälters und
- **Fig. 6:**: in einem Ausschnitt eine vergrößerte Seitenansicht des Milchbe- hälters der Figur 5.

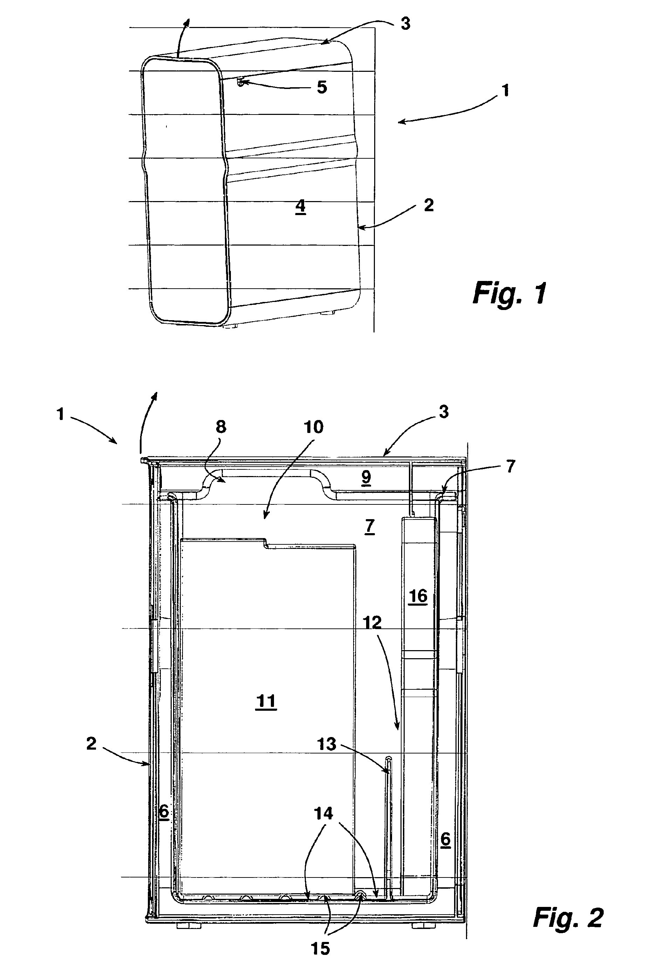

Ein Milchbehälter 1 ist in nicht näher dargestellten Art und Weise einer als Vollautomat konzipierten Kaffeemaschine zugeordnet. Der Milchbehälter 1 verfügt über ein Kunststoffgehäuse 2. Dem Gehäuse 2 zugehörig ist ein oberseitiger Deckel 3, der schwenkbar an dem übrigen Gehäuse 2 angelenkt ist. Die Schwenkbewegung zum Öffnen des Deckels ist 3 durch einen Pfeil in Figuren 1 und 2 kenntlich gemacht. In den oberen Abschluss einer Seitenwand 4 des Gehäuses 2 ist eine U-formige Leitungsdurchbrechung 5 eingebracht. Die Leitungsdurchbrechung 5 ist oberseitig durch den unteren Rand des Deckels 3 begrenzt. Die Leitungsdurchbrechung 5 dient zum Anordnen einer Milchentnahmeleitung, die mit ihrem einen Ende in ein in den Milchbehälter 1 eingestelltes Milchgebinde reicht und mit ihrem anderen Ende an eine Saugpumpe der Getränkezubereitungsmaschine angeschlossen ist. Über die Milchentnahmeleitung kann Milch für die Bereitung eines Milch- oder Kaffee-Milch-Mischgetränks entnommen werden.

Der Milchbehälter 1 verfügt neben seinem Gehäuse 2 und einer innenseitig daran angebrachten thermischen Isolationsschicht 6 über einen Einsatz 7 aus Kunststoff. Der Einsatz 7 ist aus dem Gehäuse 2 bei geöffnetem Deckel herausziehbar. Zu diesem Zweck verfügt der Einsatz 7 über Grifffortsätze 8. Der Deckel 3 ist ebenfalls mit einer thermischen Isolationsschicht 9 isoliert.

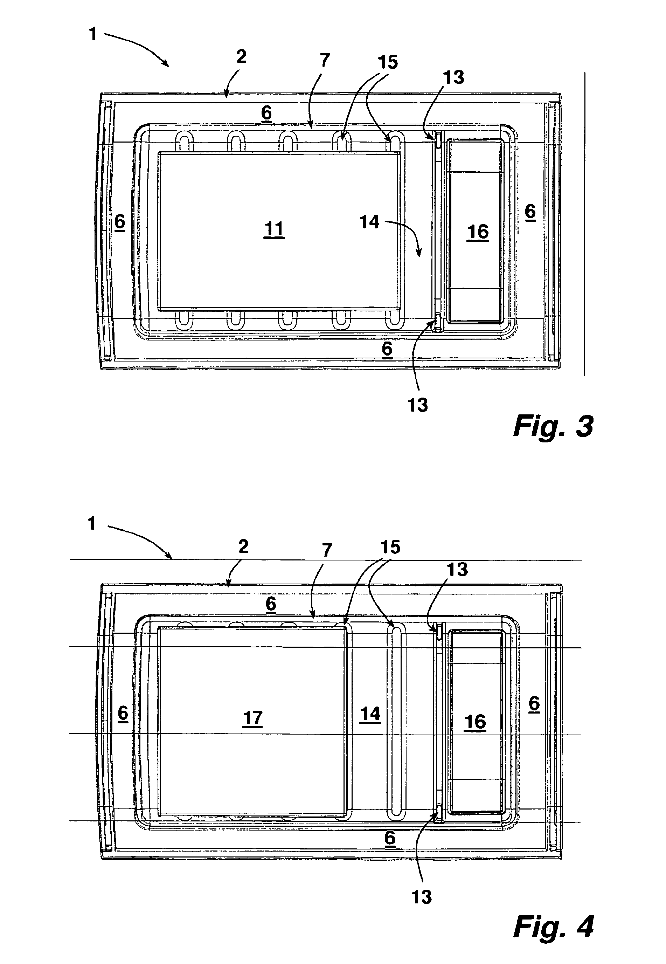

Der Einsatz 7 ist in zwei Räume bzw. Bereiche unterteilt. Der eine Bereich des Einsatzes 7 bildet einen Kühlraum 10, in dem ein Milchgebinde 11 eingestellt ist. Der andere Bereich des Einsatzes 7 ist als Kühlelementfach 12 konzipiert. Getrennt werden beide Bereiche 10, 12 durch eine von der Innenwand des Einsatzes 7 abragende Rippe 13, die, wie aus Figur 3 ersichtlich, nur mit einer geringen Höhe in das Innere des Einsatzes 7 vorspringt und sich nur im unteren Drittel des Einsatzes 7 befindet. Der Boden 14 des Kühlraumes 10 des Einsatzes 7 verfügt über mehrere wulstartige Aufstellerhöhungen 15, auf deren Oberseite das Milchgebinde 11 aufsteht. Wie aus Figur 3 ersichtlich, ist die Stellfläche des Bodens 14 des Kühlraumes 10 größer als die Aufstellfläche des Milchgebindes 11, sodass sich dieses mit Abstand von den Seitenwänden des Einsatzes 7 befindet. Die Darstellung in Figur 3 macht deutlich, dass zwischen dem Milchgebinde 11 und den Seitenwänden des Einsatzes 7 ausreichend Luft verbleibt. Ebenfalls ist das Milchgebinde 11 aufgrund der Dimensionierung des Kühlraumes 10 von einem in das Kühlfach 12 eingesetztes Kühlelement 16 beabstandet. Die Dimensionierung des Kühlelementes 16 in Richtung der Höhe der Rippe 13 ist geringfügig größer als die lichte Weite der zueinander weisenden Rippenabschlüsse, durch die die lichte Weite der Öffnung zwischen dem Kühlraum 10 und dem Kühleelementfach 12 bestimmt ist. Dieses gewährleistet, dass das Kühlelement 16 auch bei einer Bewegung des Milchbehälters in dem Kühlfach 12 verbleibt. Durch die Konzeption der Raumtrennung soll zudem erreicht werden, dass ein in den Kühlraum 10 eingesetztes Milchgebinde nicht in unmittelbaren Kontakt mit dem Kühlelement 16 gelangt. Dieses soll auch deswegen verhindert werden, damit innerhalb des Milchgebindes befindliche Milch nicht bereichsweise zu frieren beginnt, wenn dieses unmittelbar an das auf Minus-Graden befindliche Kühlelement 16 grenzt.

Bei dem dargestellten Ausführungsbeispiel ist der Kühlraum 10 des Milchbehälters 1 so konzipiert, dass in diesem unterschiedliche Milchgebinde eingestellt werden können. Während in den Figuren 2 und 3 ein Milchgebinde mit rechteckiger Aufstellfläche gezeigt ist, ist in Figur 4 in dem Milchbehälter 1 bzw. seinen Einsatz 7 ein Milchgebinde 17 mit einer quadratischen Aufstandsfläche eingestellt. Das Milchgebinde 17 ist im Unterschied zum Milchgebinde 11 höher.

Unter Bezugnahme auf die Figuren 2, 3 und 4 wird deutlich, dass sich innerhalb des Kühlraumes 10 des Milchbehälters 11 bei in das Kühlfach 12 eingesetztem, auf Minusgraden befindlichen Kühlelement 16 eine Kühlkonvektion einstellt, durch die im Gebinde 11, 17 die bereits gekühlte Milch gleichmäßig gekühlt bleibt. Dieses ist für die bestimmungsgemäße Bereitung eines Milch- oder Kaffee-Milch-Mischgetränks vorteilhaft. Der Milchbehälter 1 ist dabei hinsichtlich der Dicke seiner Isolationsschichten 6, 9 der Wärmeleitfähigkeit des oder der eingesetzten Kunststoffe zum Ausbilden des Gehäuses 2, des Deckels 3 sowie des Einsatzes 7, der Dimensionierung des Kühlraumes 10 sowie des dem Milchbehälter 1 zugeordneten Kühlelementes 16 dergestalt ausgelegt, dass die in dem Milchgebinde 11, 17 enthaltene Milch über sechs bis acht Stunden auf ausreichend gekühlter Temperatur gehalten werden kann, wenn das Milchgebinde aus dem Kühlschrank kommend in den Milchbehälter 1 eingesetzt wird. Zudem kann der Milchbehälter relativ klein bauend ausgelegt sein. Bei dem dargestellten Ausführungsbeispiel sind in den Milchgebinden 11, 17 jeweils 1 Liter Milch enthalten. Das Volumen des Kühlelementes 16 beträgt bei diesem Ausführungsbeispiel etwa 20 bis 25 % des Volumens eines Milchgebindes 11, 17.

Dem Milchbehälter 1 zugehörig ist ein weiteres, in den Figuren nicht dargestelltes Kühlelement, welches identisch mit dem dargestellten Kühlelement 16 ist. Während das eine Kühlelement 16 in den Milchbehälter 1 eingesetzt ist, befindet sich das andere Kühlelement im Gefrierfach eines Kühl- oder Gefrierschrankes. Sodann können wechselweise die Kühlelemente 16 zum Einsatz im Milchbehälter 1 verwendet werden.

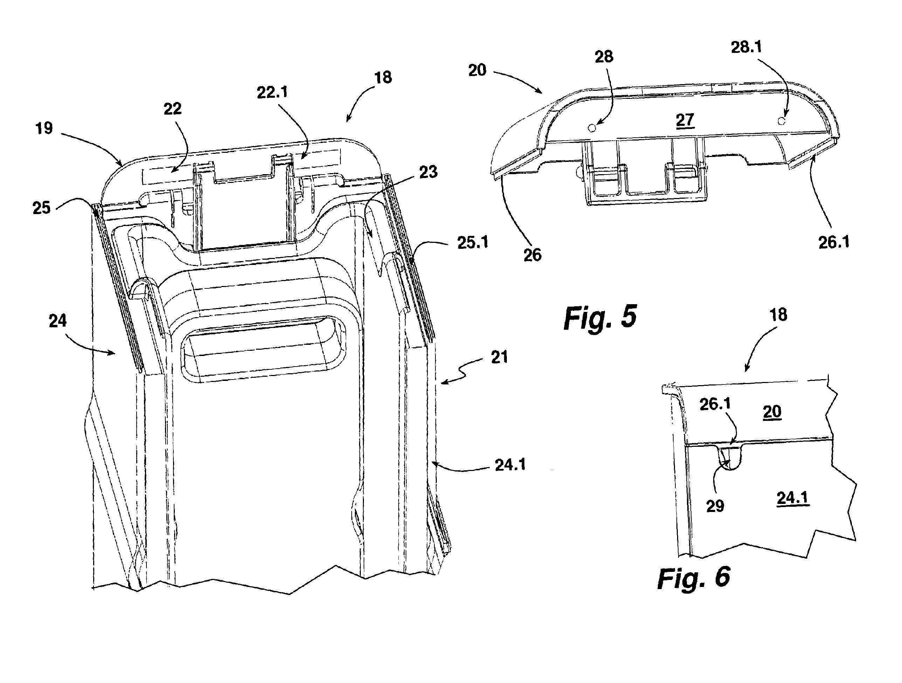

In Figur 5 ist ein weiterer Milchbehälter in einer perspektivischen Querschnittsdarstellung gezeigt. Der Milchbehälter 18 entspricht dem Milchbehälter 1, verfügt im Unterschied zu dem Milchbehälter 1 jedoch über einen an seiner rückseitigen Stirnwand 19 schwenkbar angelenkten Deckel 20. Der Deckel 20 ist in der Darstellung der Figur 6 von dem Gehäuse 21 des Milchbehälters 18 abgenommen. Der Deckel 20 ist mittels in zwei rechteckförmige Durchbrechungen 22, 22.1 einsetzbaren Scharnierteile an dem Gehäuse 21 befestigbar. Die Scharnierteile sind bei üblichen Deckelschwenkbewegungen in den Durchbrechungen 22, 22.1 gehalten. Die Verriegelung löst sich, wenn der Deckel 20 über mehr als seine bestimmungsgemäße Öffnungsweite aufgeschwenkt wird. Auf diese Weise kann der Deckel 20 ohne weiteres von dem Gehäuse 21 abgenommenen werden. Dieses ist erforderlich, wenn der Einsatz 23 etwa zu Reinigungszwecken aus dem Gehäuse 21 herausgenommen werden soll. Die oberen Abschlüsse der Seitenwände 24, 24.1 des Gehäuses 21 tragen eine der Längserstreckung des Gehäuses 21 folgende Nut 25, 25.1. Komplementär verfügt der Deckel 20 an seinen Längsseiten jeweils über einen in jeweils eine Nut 25 bzw. 25.1 einpassenden Steg 26, 26.1. Die Stege 26, 26.1 greifen, wenn der Deckel 20 das Gehäuse 21 verschließt, in jeweils eine Nut 25 bzw. 25.1 ein. Hierdurch wird die thermische Dichtigkeit des Innenraums des Milchbehälters 18 verbessert. Die vorbeschriebene Dichtigkeit des Milchbehälters 18 - gleiches gilt für den Milchbehälter 1 der Figuren 1 bis 4 - hat auch zur Folge, dass ein Luftaustausch zwischen der Umgebung des Milchbehälters und seinem Inneren quasi unterbunden ist und auf diesem Wege somit auch keine oder nur in einem vernachlässigbaren Ausmaß Feuchtigkeit in das Innere des Milchbehälters 18 eindringt, die im Inneren des Milchbehälters 18 kondensieren würde.

Um den mit seinen Scharnieren in die Durchbrechungen 22, 22.1 eingreifenden Deckel 20 in seiner das Gehäuse 21 verschließenden Position zu fixieren sind an der in Figur 5 erkennbaren vorderen Stirnseite 27 zwei Rastnoppen 28, 28.1 vorgesehen. Diese greifen in der Geschlossenstellung des Deckels in an der Innenseite der vorderen Stirnseite des Gehäuses 21 angeordnete Rastvertiefungen ein.

In der vergrößerten Seitenansicht der Figur 6 ist die Leitungsdurchbrechung 29 erkennbar, durch die eine Milchentnahmeleitung aus dem Inneren des Milchbehälters 18 herausgeführt wird. Die Leitungsdurchbrechung 29 ist trog- bzw. U-förmig konzipiert. Diese U-förmige Ausnehmung ist in die Seitenwand 24.1 des Gehäuses 21 im Bereich ihres oberen Abschlusses eingebracht. Erkennbar aus der Darstellung der Figur 6 ist, dass die Leitungsdurchbrechung 29 oberseitig durch den Steg 26.1 des Deckels 20 bei geschlossenem Deckel 20 verschlossen ist. In Abhängigkeit von dem Durchmesser des in die Leitungsdurchbrechung eingesetzten Milchentnahmeschlauches kann durch den Steg 26.1 der Schlauch in der Durchbrechung 29 fixiert werden. Die U-förmige Konzeption der Leitungsdurchbrechung 29 dient dem Zweck, dass bei Einsatz eines kreisförmigen Milchentnahmeschlauches durch diesen die Leitungsdurchbrechung 29 nicht vollständig gefüllt wird. Die verbleibenden Zwickel nach Einlegen eines Milchentnahmeschlauches in die Leitungsdurchbrechung 29 dienen dem Zweck, dass bei einer Milchentnahme Umgebungsluft in das Innere des Milchbehälters 18 einströmen kann, damit eine Entleerung der Milch aus dem in dem Milchbehälter 18 befindlichen Gebinde bei gleich bleibenden Druckverhältnissen erfolgen kann.

Bei den dargestellten Ausführungsbeispielen ist die eingesetzte Isolierung als Schaum mit einer Dichte 80 g pro Liter ausgeführt, wobei ein relativ harter Schaum eingesetzt worden ist. Die Stauchhärte nach ISO 3386 beträgt bei dem eingesetzten Schaum 170. Eingesetzt worden ist ein derartiger Schaum, da es sich gezeigt hat, dass dieser für die Zwecke der vorbeschriebenen Isolierung besonders geeignet ist und zudem gewährleistet, dass bei Vorsehen eines Einsatzes innerhalb des Gehäuses diese aus der Isolierung herausgezogen und anschließend in die das Gehäuse mit der Isolierung ohne weiteres eingeschoben werden kann.

Die Beschreibung der Getränkezubereitungsmaschine mit dem ihr zugeordneten Milchbehälter macht deutlich, dass grundsätzlich ein solcher Milchbehälter auch zum Kühlen von anderen Flüssigkeiten, die von einer Getränkezubereitungsmaschine, insbesondere einer Heißgetränkezubereitungsmaschine verarbeitet werden sollen, eingesetzt werden kann. Daher ist der Offenbarungsgehalt dieser Unterlagen nicht auf die Anwendung als Milchbehälter beschränkt. Gleichfalls können in einem solchen Milchkühlbehälter auch mehrere vorgekühlte Milchgebinde angeordnet werden. Ebenso besteht die Möglichkeit, einen solchen Kühlbehälter grundsätzlich auch unabhängig von einer Getränkezubereitungsmaschine, insbesondere einer Kaffeemaschine, einsetzen zu können.

### Bezugszeichenliste

- 1: Milchbehälter
- 2: Gehäuse
- 3: Deckel
- 4: Seitenwand
- 5: Leitungsdurchbrechung
- 6: Isolationsschicht
- 7: Einsatz
- 8: Grifffortsatz
- 9: Isolationsschicht
- 10: Kühlraum
- 11: Milchgebinde
- 12: Kühlelementfach
- 13: Rippe
- 14: Boden
- 15: Aufstellerhöhung
- 16: Kühlelement
- 17: Milchgebinde
- 18: Milchbehälter
- 19: Rückwand
- 20: Deckel
- 21: Gehäuse
- 22, 22.1: Durchbrechung
- 23: Einsatz
- 24, 24.1: Seitenwand
- 25,25.1: Nut
- 26, 26.1: Steg
- 27: Stirnseite
- 28, 28.1: Rastnoppe
- 29: Leitungsdurchbrechung

## Patentansprüche

1. Getränkezubereitungsmaschine, insbesondere Kaffeemaschine, mit einem der Maschine zugeordneten, thermisch isolierten Milchbehälter (1) zur Aufnahme eines Milch enthaltenden Gebindes (11, 17) und mit einer Leitungsdurchbrechung (5) zum Durchführen einer in das Gebinde (11, 17) reichenden Milchentnahmeleitung zur Entnahme von Milch, **dadurch gekennzeichnet, dass** in einem abgetrennt von einem das Milch enthaltende Gebinde (11, 17) aufnehmenden Kühlraum (10) des Milchbehälters (1) wenigstens ein Fach (12) zur Aufnahme zumindest eines passiven Kühlelements (16) angeordnet ist, in welchem Kühlelementfach (12) ein Kühlelement (16) einsetzbar und herausnehmbar gehalten ist, und der Kühlraum (10) zur Aufnahme des Milch enthaltenden Gebindes (11, 17) dergestalt ausgeführt ist, dass zum Erzielen einer gleichmäßigen Kühlung der in dem Gebinde (11, 17) enthaltenen Milch dieses innerhalb des Kühlraumes (10) mit Abstand zu dem zumindest einen Kühlelementfach (12) und zu zumindest einer den Kühlraum (10) begrenzenden Seitenwände abstellbar ist und dass der Kühlraum (10) zur Aufnahme des Milch enthaltenden Gebindes (11, 17) unterseitig durch einen Boden (14) zum Aufstellen des Gebindes (11, 17) begrenzt ist und dieser Boden (14) eine Stellfläche bildet, die größer ist als die Aufstandsfläche eines darauf abzustellenden Gebindes (11, 17).

2. Getränkezubereitungsmaschine nach Anspruch 1, **dadurch gekennzeichnet, dass** die Stellfläche des Kühlraumes (10) Aufstellerhöhungen (15) aufweist, auf denen ein in den Kühlraum (10) eingebrachtes Gebindes (11, 17) aufsteht.

3. Getränkezubereitungsmaschine nach Anspruch 1 oder 2, **dadurch gekennzeichnet, dass** das zumindest ein Kühlelementfach (12) durch eine von den Seitenwänden in das Innere des Milchbehälters (1) abragende Rippe (13) abgetrennt ist.

4. Getränkezubereitungsmaschine nach Anspruch 3, **dadurch gekennzeichnet, dass** die durch die Rippe (13) gebildete Abtrennung einen Freiraum zwischen dem Kühlraum (10) und dem Kühlelementfach (12) belässt, dessen lichte Weite nur geringfügig kleiner ist als die Ausdehnung eines in das Kühlelementfach (12) einzusetzenden Kühlelements (16) in Richtung der Höhe der Rippe (13).

5. Getränkezubereitungsmaschine nach einem der Ansprüche 1 bis 4, **dadurch gekennzeichnet, dass** der Milchbehälter (1) ein Gehäuse (2), eine daran innenseitig angebrachte thermische Isolationsschicht (6) und einen den Kühlraum (10) mit dem zumindest einen Kühlelementfach (12) bildenden Einsatz (7) aufweist, der aus dem Gehäuse (2) und seiner thermischen Isolierung (6) herausnehmbar ist.

6. Getränkezubereitungsmaschine nach Anspruch 5, **dadurch gekennzeichnet, dass** an das Gehäuse (2) ein Deckel (3) zum Verschließen des durch den Einsatz (7) gebildeten Kühlraums (10) schwenkbar angelenkt ist.

7. Getränkezubereitungsmaschine nach Anspruch 6, **dadurch gekennzeichnet, dass** der Deckel (3) die Gehäuseoberseite vollständig verschließt.

8. Getränkezubereitungsmaschine nach einem der Ansprüche 1 bis 7, **dadurch gekennzeichnet, dass** die Leitungsdurchbrechung (5) zum Durchführen einer Milchentnahmeleitung in den oberen, zum Deckel (3) weisenden Rand des Gehäuses (2) eingebracht ist.

9. Thermisch isolierter Milchbehälter für eine Getränkezubereitungsmaschine, insbesondere eine Kaffeemaschine zur Aufnahme eines Milch enthaltenden Gebindes (11, 17) und mit einer Leitungsdurchbrechung (5) zum Durchführen einer in das Gebinde (11, 17) reichenden Milchentnahmeleitung zur Entnahme von Milch, **dadurch gekennzeichnet, dass** in einem abgetrennt von einem das Milch enthaltende Gebinde (11, 17) aufnehmenden Kühlraumes (10) des Milchbehälters (1) wenigstens ein Fach (12) zur Aufnahme zumindest eines passiven Kühlelements (16) angeordnet ist, in welchem Kühlelementfach (12) ein Kühlelement (16) einsetzbar und herausnehmbar gehalten ist, und der Kühlraum (10) zur Aufnahme des Milch enthaltenden Gebindes (11, 17) dergestalt ausgeführt ist, dass zum Erzielen einer gleichmäßigen Kühlung der in dem Gebinde enthaltenen Milch dieses innerhalb des Kühlraumes (10) mit Abstand zu dem zumindest einen Kühlelementfach (12) und zu zumindest einer den Kühlraum (10) begrenzenden Seitenwände abstellbar ist und dass der Kühlraum (10) zur Aufnahme des Milch enthaltenden Gebindes (11, 17) unterseitig durch einen Boden (14) zum Aufstellen des Gebindes (11, 17) begrenzt ist und dieser Boden (14) eine Stellfläche bildet, die größer ist als die Aufstandsfläche eines darauf abzustellenden Gebindes (11, 17).

10. Milchbehälter nach Anspruch 9, **dadurch gekennzeichnet, dass** dieser eines oder mehrere der Merkmale des Milchbehälters der Ansprüche 2 bis 8 aufweist.

## Claims

1. Beverage making machine, especially coffee maker, with a thermally insulated milk container (1) for receiving a container (11, 17) containing milk, where the milk container is attached to the machine (11, 17), and with a line through hole (5) for feeding through a milk withdrawal line for withdrawal of milk that reaches into the container (11, 17), **characterised in that**, in a cooling chamber (10) of the milk container (1) that receives separately from a container (11, 17) containing milk, at least one tray (12) for receiving at least one passive cooling element (16) is arranged, in which cooling element tray (12) a cooling element (16) is held insertably and removably, and the cooling chamber (10) for receiving the milk-containing container (11, 17) is designed such that, for achieving an even cooling of the milk contained in the container (11, 17), said container can be placed within the cooling chamber (10) at a distance to the at least one cooling element tray (12) and to at least one side wall limiting the cooling chamber (10) and that the cooling chamber (10) for receiving the container (11, 17) containing milk is limited, on the underside, by a floor (14) for placing the container (11, 17) and this floor (14) forms a standing space which is greater than the footprint of a container (11, 17) to be placed thereon.

2. Beverage making machine according to claim 1, **characterised in that** the standing space of the cooling chamber (10) has upstanding elevations (15) on which a container (11, 17) introduced into the cooling chamber (10) stands upright.

3. Beverage making machine according to claim 1 or 2, **characterised in that** the at least one cooling element tray (12) is separated by a rib (13) projecting from the side walls into the inside of the milk container (1).

4. Beverage making machine according to claim 3, **characterised in that** the separation created by the rib (13) leaves a clearance between the cooling chamber (10) and the cooling element tray (12), the clear width of which is only slightly smaller than the expansion of a cooling element (16) to be inserted into the cooling element tray (12) in the direction of the height of the rib (13).

5. Beverage making machine according to any one of the claims 1 to 4, **characterised in that** the milk container (1) has a housing (2), a thermally insulated layer (6) internally attached thereto and an insert (7) forming the cooling chamber (10) with the at least one cooling element tray (12), said insert being removable from the housing (2) and its thermal insulation (6).

6. Beverage making machine according to claim 5, **characterised in that** a lid (3) for closing the cooling chamber (10) formed by the insert (7) is pivotably applied to the housing (2).

7. Beverage making machine according to claim 6, **characterised in that** the lid (3) fully closes the top of the housing.

8. Beverage making machine according to any one of the claims 1 to 7, **characterised in that** the line through hole (5) for feeding through a milk withdrawal line is introduced into the upper edge of the housing (2), said edge pointing to the lid (3).

9. Thermally insulated milk container for a beverage making machine, especially a coffee maker, for receiving a container (11, 17) containing milk and with a line through hole (5) for feeding through a milk withdrawal line for withdrawal of milk that reaches into the container (11, 17), **characterised in that**, in a cooling chamber (10) of the milk container (1) that receives separately from a container (11, 17) containing milk, at least one tray (12) for receiving at least one passive cooling element (16) is arranged, in which cooling element tray (12) a cooling element (16) is held insertably and removably, and the cooling chamber (10) for receiving the milk-containing container (11, 17) is designed such that, for achieving an even cooling of the milk contained in the container (11, 17), said container can be placed within the cooling chamber (10) at a distance to the at least one cooling element tray (12) and to at least one side wall limiting the cooling chamber (10) and that the cooling chamber (10) for receiving the container (11, 17) containing milk is limited, on the underside, by a floor (14) for placing the container (11, 17) and this floor (14) forms a standing space which is greater than the footprint of a container (11, 17) to be placed thereon.

10. Milk container according to claim 9, **characterised in that** it has one or several of the features of the milk container of claims 2 to 8.

## Revendications

1. Machine de préparation de boissons, notamment machine à café, comportant un récipient de lait (1) correspondant doté d'une isolation thermique, destiné à recevoir un pack (11, 17) contenant du lait, et avec une perforation de conduit (5) destinée à faire passer un conduit de prélèvement de lait qui débouche dans le pack (11, 17), **caractérisé en ce qu'**au moins un compartiment (12) destiné à recevoir au moins un élément de refroidissement (16) passif est disposé dans le récipient à lait (1), séparé du sas de refroidissement (10) contenant le pack (11, 17) de lait, dans lequel compartiment (12) à élément de refroidissement est maintenu, avec une possibilité d'introduction et d'extraction, un élément de refroidissement (16) et **en ce que** le sas de refroidissement (10) contenant le pack (11, 17) de lait est configuré de telle manière que, pour obtenir un refroidissement homogène du lait contenu dans le pack (11, 17), ce dernier peut être déposé dans le sas de refroidissement (10) en respectant un intervalle par rapport à au moins un compartiment (12) à élément de refroidissement et par rapport à une paroi latérale délimitant le sas de refroidissement (10) et **en ce que** le sas de refroidissement (10) contenant le pack (11, 17) de lait est délimité en bas par un fond (14) sur lequel est déposé le pack (11, 17) et que ce fond (14) constitue une surface de dépose qui est plus grande que la surface d'emprise d'un pack (11, 17) à déposer sur cette dernière.

2. Machine de préparation de boissons selon la revendication 1, **caractérisée en ce que** la surface de dépose du sas de refroidissement (10) présente des surélévations de dépose (15) sur lesquelles est déposé le pack (11, 17) introduit dans le sas de refroidissement (10).

3. Machine de préparation de boissons selon la revendication 1 ou 2, **caractérisée en ce que** l'au moins un compartiment (12) à élément de refroidissement est séparé par un montant (13) partant des parois latérales, en saillie vers l'intérieur du récipient à lait (1).

4. Machine de préparation de boissons selon la revendication 3, **caractérisée en ce que** la séparation formée par le montant (13) laisse un espace libre entre le sas de refroidissement (10) et le compartiment (12) à élément de refroidissement dont la largeur nette n'est que légèrement inférieure à l'étendue d'un élément de refroidissement (16) à introduire dans le sens de la hauteur du montant (13) dans le compartiment (12) à élément de refroidissement.

5. Machine de préparation de boissons selon l'une des revendications 1 à 4, **caractérisée en ce que** le récipient de lait (1) présente un boîtier (2), une couche d'isolant (6) thermique fixée sur la face intérieure de ce dernier et un insert (7) formant le sas de refroidissement (10) avec au moins un compartiment (12) à élément de refroidissement, qui est extractible du boîtier (2) et de son isolation thermique (6).

6. Machine de préparation de boissons selon la revendication 5, **caractérisée en ce qu'**un couvercle (3) destiné à fermer le sas de refroidissement (10) formé par l'insert (7) est articulé de façon pivotante sur le boîtier (2).

7. Machine de préparation de boissons selon la revendication 6, **caractérisée en ce que** le couvercle (3) referme complètement la face supérieure du boîtier.

8. Machine de préparation de boissons selon l'une des revendications 1 à 7, **caractérisée en ce que** la perforation de conduit (5) destinée à faire passer un conduit de prélèvement de lait est aménagée dans le bord supérieur du boîtier (2), orienté vers le couvercle (3).

9. Récipient de lait isolé thermiquement pour une machine de préparation de boissons, notamment une machine à café, destiné à recevoir un pack (11, 17) contenant du lait, et avec une perforation de conduit (5) destinée à faire passer un conduit de prélèvement de lait qui débouche dans le pack (11, 17), **caractérisé en ce qu'**au moins un compartiment (12) destiné à recevoir au moins un élément de refroidissement (16) passif est disposé dans le récipient à lait (1), séparé du sas de refroidissement (10) contenant le pack (11, 17) de lait, dans lequel compartiment (12) à élément de refroidissement est maintenu, avec une possibilité d'introduction et d'extraction, un élément de refroidissement (16) et **en ce que** le sas de refroidissement (10) contenant le pack (11, 17) de lait est configuré de telle manière que, pour obtenir un refroidissement homogène du lait contenu dans le pack, ce dernier peut être déposé dans le sas de refroidissement (10) en respectant un intervalle par rapport à l'au moins un compartiment (12) à élément de refroidissement et par rapport à une paroi latérale délimitant le sas de refroidissement (10) et **en ce que** le sas de refroidissement (10) contenant le pack (11, 17) de lait est délimité en bas par un fond (14) sur lequel est déposé le pack (11, 17) et que ce fond (14) constitue une surface de dépose qui est plus grande que la surface d'emprise d'un pack (11, 17) à déposer sur cette dernière.

10. Récipient de lait selon la revendication 9, **caractérisé en ce que** ce dernier présente une ou plusieurs caractéristiques du récipient à lait des revendications 2 à 8.
